# EUROPEAN PATENT APPLICATION

(11) **EP 4 485 763 A1**
(43) Date of publication of application: **01.01.2025**
(21) Application number: 22928849.3
(22) Date of filing: 24.10.2022
(51) Int. Cl.: H02K 11/215, H02K 1/276, H02K 1/28, H02K 5/24, H02K 29/08

(54) **ROTOR AND ELECTRIC MOTOR**

(30) Priority: 24.02.2022 JP 2022027267
(71) Applicant: Panasonic Intellectual Property Management Co., Ltd., Kadoma-shi, Osaka 571-0057 (JP)
(72) Inventor: NANBU, Yasuo, Kadoma-shi, Osaka 571-0057 (JP)
(74) Representative: Novagraaf International SA
(86) International application number: PCT/JP2022/039432
(87) International publication number: WO 2023/162331

(57) **Abstract**

A rotor included in an electric motor includes an inner core to which a rotary shaft is fixed, an outer core surrounding the inner core, an elastic body filled between the inner core and the outer core, a plurality of rotor magnets annularly disposed along a rotation direction of the rotary shaft and fixed to the outer core, and a sensor magnet fixed to the outer core in an axial direction in which an axial center of the rotary shaft extends, in which each of the plurality of rotor magnets has a magnetic flux density of more than or equal to 1.0 Tesla, and the sensor magnet is provided integrally with the outer core.

## Description

### TECHNICAL FIELD

The present disclosure relates to a rotor and an electric motor. The present disclosure particularly relates to a rotor and an electric motor suitably used for, for example, a fan motor in which a rotating fan is attached to a rotary shaft.

### BACKGROUND ART

Electric motors are used in various electric devices such as household devices or industrial devices. For example, in an outdoor unit of an air conditioner, a fan motor in which a rotating fan is attached to a rotary shaft is used as an electric motor.

As one of electric motors, a permanent magnet type electric motor having a rotor in which a permanent magnet is fixed to a core as a rotor magnet has conventionally been known. Examples of the permanent magnet type electric motor include a permanent magnet embedded type interior permanent magnet (IPM) motor having a rotor in which a plurality of permanent magnets are embedded in a core, and a surface magnet type surface permanent magnet (SPM) motor having a rotor in which a plurality of permanent magnets are disposed on an outer surface of a core.

The permanent magnet type electric motor can obtain reluctance torque due to unevenness of the magnitude of magnetic resistance generated in the core in addition to magnet torque from the permanent magnet of the rotor. Thus, a small and highly efficient electric motor can be realized.

However, in the permanent magnet type electric motor, the magnetic attraction force varies depending on the rotational position of the rotor due to the magnetic flux generated from the permanent magnet of the rotor. For this reason, when the rotor rotates, torque pulsation called cogging torque is generated. As a result, the rotor resonates together with the load attached to the rotary shaft, and vibration and noise are generated. Further, in a fan motor to which a rotating fan is attached as a load, vibration when the rotor rotates increases due to imbalance of the rotating fan.

Thus, to suppress vibration and noise, there has been conventionally proposed an electric motor in which a core of a rotor is divided into an inner core and an outer core, and a vibration-proof rubber formed of an elastic body is filled between the inner core and the outer core (see, for example, PTL 1).

Some electric motors include a magnetic detection sensor to detect rotational displacement such as a rotation angle or a rotational position of a rotor. The magnetic detection sensor is disposed facing the rotor in an axial direction of the rotary shaft, for example. In this case, to detect magnetism from the rotor with the magnetic detection sensor, it is conceivable to increase the stacking thickness of the electromagnetic steel sheets constituting the core included in the rotor to lengthen the core in the axial direction.

In recent years, to realize a high-output electric motor, it has been studied to change a rotor magnet (permanent magnet) of a rotor in a permanent magnet type electric motor from a ferrite magnet to a neodymium magnet. Thus, when a neodymium magnet is used for the core elongated in the axial direction as described above, the neodymium magnet also needs to be elongated in the axial direction. However, the neodymium magnet is a rare magnet compared to the ferrite magnet, and it is expensive. Thus, it is difficult to lengthen the neodymium magnet in the axial direction from the viewpoint of stable magnet supply and cost.

In the rotor in which a vibration-proof rubber is filled between the inner core and the outer core, when the output is increased using the neodymium magnet as the rotor magnet, the vibration-proof rubber deforms when the rotor rotates at a high speed, and a following delay occurs in the outer core with respect to the rotation of the rotor. The vibration-proof rubber deforms to cause a following delay in the outer core also when the electric motor is exposed to a high temperature or when a load is large. When a following delay occurs in the outer core like this, there is a possibility that the rotational displacement cannot be accurately detected even though the rotational displacement of the rotor is detected using the magnetic detection sensor.

Event though an electric motor is tried to be realized in which the structure in which a vibration-proof rubber formed of an elastic body is filled between the inner core and the outer core is adopted to realize the noise reduction, a neodymium magnet is adopted as the rotor magnet to realize the high output, and the rotational displacement of a rotor is detected by using a magnetic detection sensor, it is difficult to accurately detect the rotational displacement.

### Citation List

### Patent Literature

PTL 1: Unexamined Japanese Patent Publication No. 2001-268831

### SUMMARY OF THE INVENTION

The present disclosure has been made in order to solve such a problem. An object of the present disclosure is to provide an electric motor and a rotor included in the electric motor capable of achieving noise reduction and high output and accurately detecting rotational displacement of the rotor.

To achieve the object described above, one aspect of a rotor according to the present disclosure includes, an inner core to which a rotary shaft is fixed, an outer core surrounding the inner core, an elastic body filled between the inner core and the outer core, a plurality of rotor magnets annularly disposed along a rotation direction of the rotary shaft and fixed to the outer core, and a sensor magnet fixed to the outer core in an axial direction in which an axial center of the rotary shaft extends, whereby each of the plurality of rotor magnets has a magnetic flux density of more than or equal to 1.0 Tesla, and the sensor magnet is provided integrally with the outer core.

The plurality of rotor magnets may be neodymium magnets.

The outer core and the sensor magnet each have a fitting part that fits each other. It is preferable that the outer core includes a first attachment hole or a first leg as the fitting part, and the sensor magnet includes a second leg inserted into the first attachment hole or a second attachment hole into which the first leg is inserted as the fitting part.

It is preferable that the first leg is press-fitted into the second attachment hole, or the second leg is press-fitted into the first attachment hole.

It is preferable that the elastic body is in contact with an inner surface of the leg.

The sensor magnet and the outer core may be fixed with an adhesive.

It is preferable that the outer core further includes a plurality of insertion holes into which the plurality of rotor magnets are inserted.

It is preferable that the outer core further includes an outer peripheral surface to which the plurality of rotor magnets are attached, the outer peripheral surface surrounding the rotary shaft along the rotation direction.

It is preferable that the sensor magnet is formed in an annular shape surrounding the rotary shaft, the sensor magnet including a surface facing the axial direction of the rotary shaft, the surface being magnetized corresponding to the plurality of rotor magnets fixed to the outer core.

One aspect of an electric motor according to the present disclosure includes the rotor described above and a stator positioned outside the rotor.

According to the present disclosure, it is possible to realize an electric motor or the like capable of achieving noise reduction and high output and accurately detecting rotational displacement of a rotor.

### BRIEF DESCRIPTION OF THE DRAWINGS

Fig. 1 is a sectional view of an electric motor according to an exemplary embodiment.
Fig. 2 is a perspective view of a rotor included in the electric motor according to the exemplary embodiment.
Fig. 3 is an exploded perspective view of the rotor according to the exemplary embodiment when viewed obliquely from above.
Fig. 4 is an exploded perspective view of the rotor according to the exemplary embodiment when viewed obliquely from below.
Fig. 5 is a sectional view of the rotor according to the exemplary embodiment taken along a plane orthogonal to the axial center of a rotary shaft.
Fig. 6A is a diagram for describing a step until a sensor magnet is fixed to an outer core molded product in a method for assembling a rotor according to the exemplary embodiment.
Fig. 6B is a diagram for describing a step until the sensor magnet is fixed to the outer core molded product in the method for assembling a rotor according to the exemplary embodiment.
Fig. 6C is a diagram for describing a step until the sensor magnet is fixed to the outer core molded product in the method for assembling a rotor according to the exemplary embodiment.
Fig. 7 is a diagram for describing a step of fixing the sensor magnet to the outer core molded product in the method for assembling a rotor according to the exemplary embodiment.
Fig. 8A is a diagram for describing a step until an elastic body is filled between an inner core and an outer core after the sensor magnet is fixed to the outer core molded product in the method for assembling a rotor according to the exemplary embodiment.
Fig. 8B is a diagram for describing a step until the elastic body is filled between the inner core and the outer core after the sensor magnet is fixed to the outer core molded product in the method for assembling a rotor according to the exemplary embodiment.
Fig. 9 is a sectional view of a rotor according to a modification.
Fig. 10 is a perspective view of a rotor according to another modification.

### DESCRIPTION OF EMBODIMENT

Hereinafter, exemplary embodiments of the present disclosure will be described with reference to the drawings. Each of the exemplary embodiments described below illustrates one specific example of the present disclosure. Therefore, numerical values, constituent elements, arrangement positions and connection modes of the constituent elements, steps, order of the steps, and the like shown in the following exemplary embodiments are merely examples, and are not intended to limit the present disclosure. Thus, among the constituent elements in the following exemplary embodiments, constituent elements that are not described in independent claims indicating the highest concept of the present disclosure are described as optional constituent elements.

The drawings are each a schematic view, and are not necessarily strictly illustrated. In addition, in each of the drawings, substantially similar configurations are denoted with the same reference mark and redundant description will be omitted or simplified. Further, in the present description, the terms "upper" and "lower" do not necessarily refer to an upward direction (vertically upward) and a downward direction (vertically downward) in terms of absolute space recognition.

### (Exemplary embodiment)

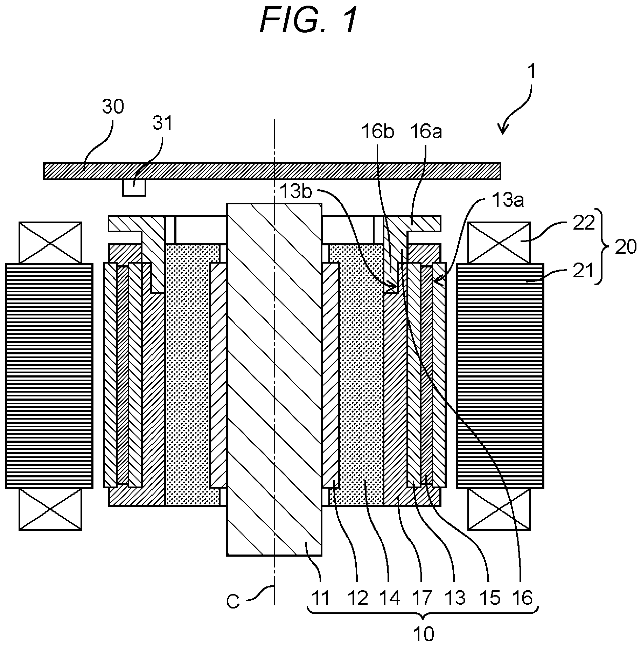

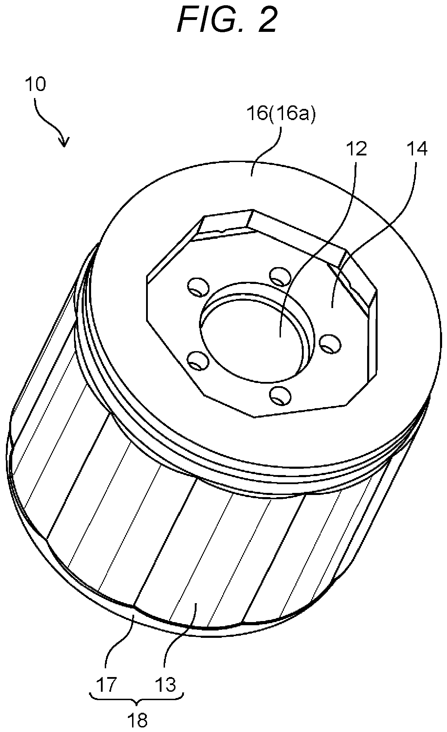

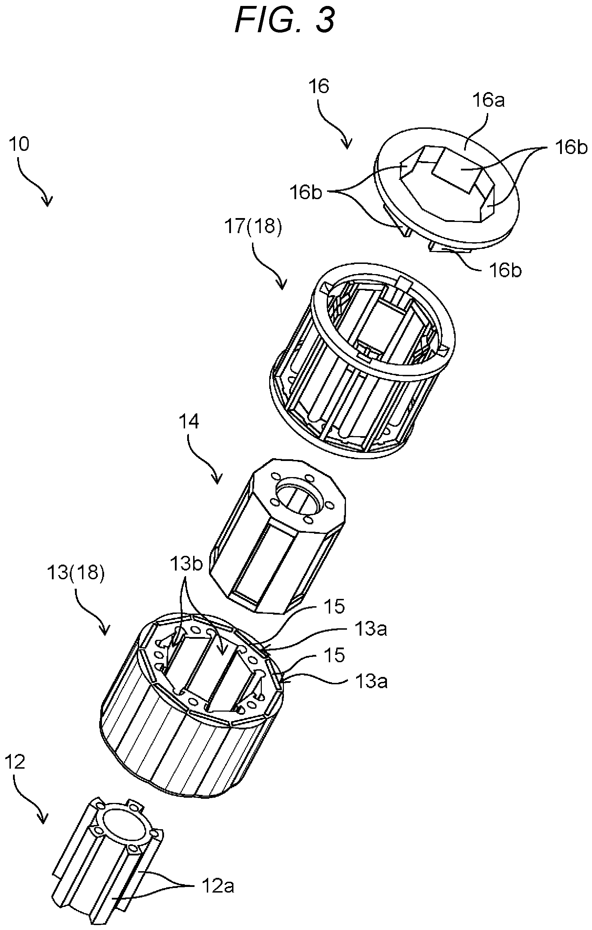

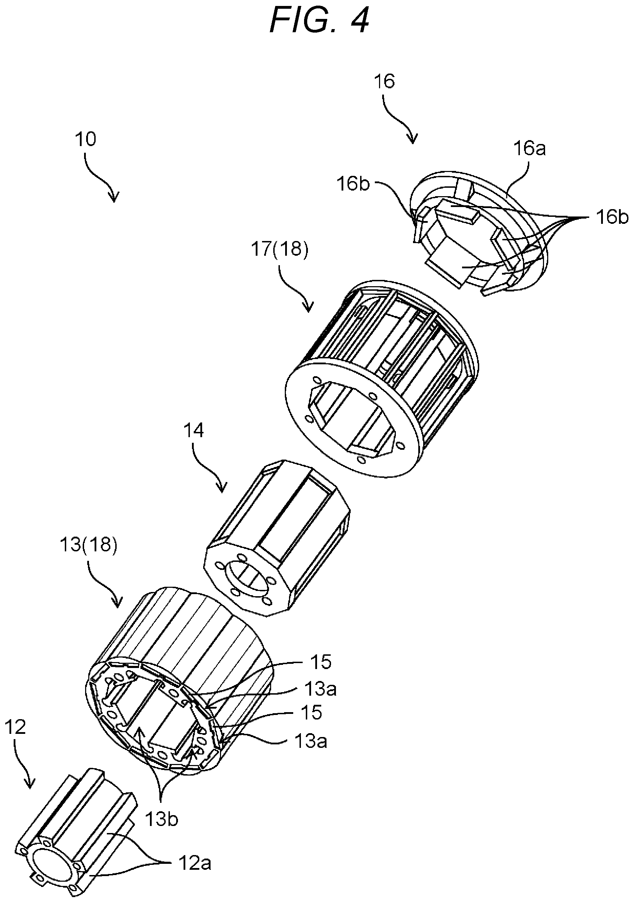

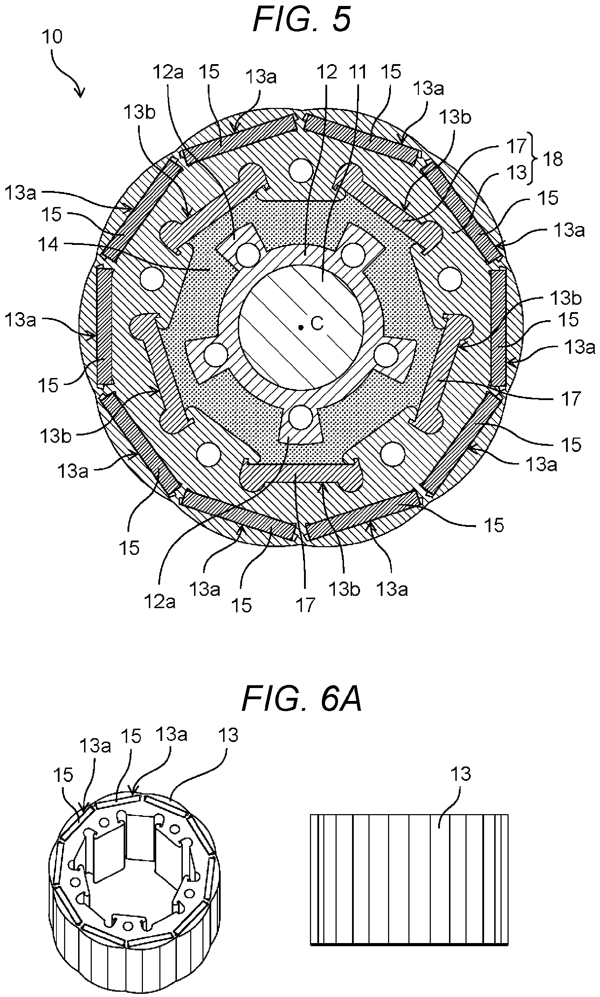

First, a configurations of electric motor 1 according to an exemplary embodiment and rotor 10 included in electric motor 1 will be described with reference to Figs. 1 to 5. Fig. 1 is a sectional view of electric motor 1 according to the exemplary embodiment. Fig. 1 is a sectional view taken along a plane passing through axial center C of rotary shaft 11. Fig. 2 is a perspective view of rotor 10 included in electric motor 1 according to the exemplary embodiment. Fig. 3 is an exploded perspective view of rotor 10 according to the exemplary embodiment when viewed obliquely from above. Fig. 4 is an exploded perspective view of rotor 10 according to the exemplary embodiment when viewed obliquely from below. Fig. 5 is a sectional view of rotor 10 according to the exemplary embodiment taken along a plane orthogonal to axial center C of rotary shaft 11. In Figs. 2 to 4, rotary shaft 11 is omitted.

As illustrated in Fig. 1, electric motor 1 includes rotor 10, stator 20, and circuit board 30. Although not illustrated, electric motor 1 includes a metal frame or bracket for housing rotor 10, stator 20, and circuit board 30.

Electric motor 1 is a brushless motor that does not use a brush. Electric motor 1 is an inner rotor type motor in which rotor 10 is disposed inside stator 20. That is, stator 20 is disposed surrounding rotor 10.

Electric motor 1 configured as described above is used, for example, as a fan motor mounted on an outdoor unit of an air conditioner. When electric motor 1 is used as a fan motor, a rotating fan is attached as a load to rotary shaft 11 of electric motor 1.

Rotor 10 rotates with a magnetic force generated in stator 20. As illustrated in Figs. 1 and 5, rotor 10 includes rotary shaft 11. Rotor 10 rotates about axial center C of rotary shaft 11. Rotary shaft 11 is a shaft having axial center C. Rotary shaft 11 is an elongated rod-like member such as a metal rod. A longitudinal direction (extending direction) of rotary shaft 11 is a direction in which axial center C extends. A load such as a rotating fan is attached to rotary shaft 11.

Although not illustrated, electric motor 1 includes a bearing. Rotary shaft 11 is rotatably supported by the bearing. Bearings are disposed at both ends of rotary shaft 11. That is, rotary shaft 11 is supported by two bearings. As an example, the bearings are ball bearings, but they may be another type of bearings such as thrust bearings.

As illustrated in Fig. 1, rotor 10 is disposed facing stator 20 via an air gap. Rotor 10 faces stator 20 in a direction (radial direction) orthogonal to the direction of axial center C of rotary shaft 11.

Rotor 10 has a configuration in which a plurality of N poles and S poles are alternately and repeatedly present along the rotation direction of rotary shaft 11. This causes rotor 10 to generate a magnetic force acting on stator 20. The direction of the magnetic flux generated by rotor 10 is a direction orthogonal to the direction of axial center C (axial direction) of rotary shaft 11. That is, the direction of the magnetic flux generated by rotor 10 is the radial direction.

As illustrated in Figs. 1 to 5, rotor 10 includes a rotor core including inner core 12 and outer core 13, elastic body 14 filled between inner core 12 and outer core 13, and a plurality of rotor magnets 15 fixed to outer core 13. The plurality of rotor magnets 15 is annularly disposed along the rotation direction of rotary shaft 11. Rotor 10 is a permanent magnet embedded type rotor in which rotor magnet 15 is embedded in a rotor core. That is, electric motor 1 in the present exemplary embodiment is an IPM motor.

Inner core 12 and outer core 13 are stacked bodies in which a plurality of steel sheets are stacked in a direction in which axial center C included in rotary shaft 11 extends. The plurality of steel sheets are, for example, punched electromagnetic steel sheets formed in a predetermined shape. The plurality of steel sheets are fixed to each other by crimping, for example. Each of inner core 12 and outer core 13 is not limited to a stacked body of a plurality of steel sheets, and may be a bulk body made of a magnetic material.

Inner core 12 is positioned inside outer core 13. Rotary shaft 11 is fixed to inner core 12. Rotary shaft 11 is fixed to inner core 12 in a state of penetrating inner core 12 so as to extend on both sides of inner core 12 in the extending direction of axial center C of rotary shaft 11. Specifically, rotary shaft 11 is inserted into a through hole provided at the center of inner core 12 and fixed to inner core 12. Rotary shaft 11 is fixed to inner core 12, for example, by being press-fitted or shrink-fitted into the through hole of inner core 12.

As illustrated in Figs. 3 to 5, a plurality of projections 12a extending in the direction in which axial center C of rotary shaft 11 extends are formed on the outer peripheral surface of inner core 12. With this configuration, elastic body 14 is easily held by inner core 12 because of the anchor effect with projection 12a. That is, since elastic body 14 is caught by projection 12a of inner core 12 and held by inner core 12, it is possible to prevent inner core 12 and elastic body 14 from being displaced when rotor 10 rotates and the like.

As illustrated in Fig. 5, outer core 13 is positioned outside inner core 12 and surrounds inner core 12. As illustrated in Figs. 1 and 2, both end surfaces of outer core 13 in the direction in which axial center C of rotary shaft 11 extends are covered with molding frame 17. That is, outer core molded product 18 is configured by outer core 13 and molding frame 17. Molding frame 17 is made of, for example, a resin material such as a bulkmolding compound (BMC) which is a thermosetting molding material using an unsaturated polyester resin.

As illustrated in Figs. 3 to 5, outer core 13 has a plurality of first insertion holes 13a. The plurality of first insertion holes 13a are rotor magnet insertion holes (first magnet insertion holes) into which rotor magnet 15 is inserted. As illustrated in Fig. 5, the plurality of first insertion holes 13a are provided at equal intervals along the rotation direction of rotary shaft 11. In the present exemplary embodiment, 10 first insertion holes 13a are provided. Ten of first insertion holes 13a are provided so as to be vertically symmetric and horizontally symmetric in top view.

First insertion hole 13a is a through hole penetrating outer core 13 along the direction in which axial center C of rotary shaft 11 extends. Thus, first insertion hole 13a is open at both end surfaces of outer core 13 in the direction in which axial center C of rotary shaft 11 extends. The opening shape of first insertion hole 13a is a slit-like substantially rectangular shape in top view. First insertion hole 13a does not have to penetrate outer core 13. For example, the opening corresponding to first insertion hole 13a does not have to be provided in a steel sheet at one end of the plurality of steel sheets constituting outer core 13. In this case, the steel sheet without an opening serves as a stopper when rotor magnet 15 is inserted into first insertion hole 13a. Alternatively, a projection serving as a stopper may be provided in a part of the opening of a steel sheet at one end of the plurality of steel sheets constituting outer core 13.

As illustrated in Figs. 3 to 5, outer core 13 has second insertion hole 13b. Second insertion hole 13b is a sensor magnet insertion hole (second magnet insertion hole) into which a part of sensor magnet 16 is inserted. As illustrated in Fig. 1, leg 16b of sensor magnet 16 is inserted into second insertion hole 13b.

A plurality of second insertion holes 13b are formed. As illustrated in Fig. 5, the plurality of second insertion holes 13b are provided at equal intervals along the rotation direction of rotary shaft 11. Specifically, five second insertion holes 13b are provided.

Second insertion hole 13b is a through hole penetrating outer core 13 along the direction in which axial center C of rotary shaft 11 extends. Thus, in the same manner as first insertion hole 13a, second insertion hole 13b is open at both end surfaces of outer core 13 in the direction in which axial center C of rotary shaft 11 extends. Second insertion hole 13b only needs to have a shape into which leg 16b of sensor magnet 16 is inserted. Thus, the second insertion hole does not have to penetrate outer core 13. That is, second insertion hole 13b may be a recess having a bottom.

As illustrated in Fig. 5, an opening is formed on the inner peripheral side of second insertion hole 13b. Thus, in a sectional view taken along a plane orthogonal to the direction in which axial center C of rotary shaft 11 extends, second insertion hole 13b is notched outward in the radial direction of outer core 13. With this configuration, the material constituting molding frame 17 is embedded in a part of second insertion hole 13b through the opening, whereby a recess to which leg 16b of sensor magnet 16 is fitted is formed, and the opening of second insertion hole 13b is closed.

Elastic body 14 is present between inner core 12 and outer core 13. Elastic body 14 is filled so as to fill the space between inner core 12 and outer core 13. In the present exemplary embodiment, elastic body 14 is filled between inner core 12 and outer core molded product 18. That is, as illustrated in Fig. 1, since molding frame 17 is present inside second insertion hole 13b in outer core 13, elastic body 14 is not only in contact with outer core 13 but also in contact with molding frame 17.

Elastic body 14 is a vibration-proof rubber for suppressing vibration of rotor 10. Elastic body 14 is made of a resin material having rubber elasticity. Elastic body 14 is made of, for example, silicone rubber, fluororubber, or elastomer. In the present exemplary embodiment, elastic body 14 is made of an elastomer having rubber elasticity. The resin material constituting elastic body 14 may be either a thermoplastic resin or a thermosetting resin.

As illustrated in Fig. 5, on the outer peripheral surface of outer core 13, a recess is formed so that a portion between two adjacent rotor magnets 15 falls inward (that is, in a direction toward rotary shaft 11). As a result, outer core 13 has a petal-like shape in which the corresponding position of each of the plurality of rotor magnets 15 in the outermost peripheral portion bulges outward in an arc shape when viewed from the direction in which axial center C of rotary shaft 11 extends. This configuration can suppress cogging torque.

Rotor magnet 15 is inserted into each of the plurality of first insertion holes 13a. Outer core 13 is provided with 10 first insertion holes 13a. Thus, 10 rotor magnets 15 are held in outer core 13. In the same manner as the plurality of first insertion holes 13a, the plurality of rotor magnets 15 are provided at equal intervals along the rotation direction of rotary shaft 11.

Each of the plurality of rotor magnets 15 is a magnetized permanent magnet. The plurality of rotor magnets 15 are disposed such that magnetic poles of S poles and N poles are alternately present in the rotation direction of rotary shaft 11. That is, in the two adjacent rotor magnets 15, the directions of the magnetic poles of the S pole and the N pole are opposite to each other. The direction of the magnetic flux generated by the plurality of rotor magnets 15 is a direction (radial direction) orthogonal to the direction of axial center C of rotary shaft 11.

Rotor magnet 15 may be magnetized after rotor magnet 15 is inserted into first insertion hole 13a, or may be magnetized in advance before rotor magnet 15 is inserted into first insertion hole 13a. However, considering workability of inserting rotor magnet 15 into first insertion hole 13a, it is better to magnetize rotor magnet 15 after the rotor magnet is inserted into first insertion hole 13a.

Rotor magnet 15 is a plate-shaped rectangular parallelepiped. Rotor magnet 15 has a rectangular shape in plan view. Rotor magnet 15 inserted into first insertion hole 13a may be fixed to outer core 13 with an adhesive, or may be fixed to outer core 13 by separately providing a fixing member having a projection that fills a gap between rotor magnet 15 and first insertion hole 13a.

Magnetic flux density (residual magnetic flux density; Br) of each of the plurality of rotor magnets 15 is more than or equal to 1.0 Tesla. As rotor magnet 15, a rare earth magnet made of a sintered magnet can be used. Rotor magnet 15 is a neodymium magnet containing neodymium, iron, and boron (Nd-Fe-B) as main components. The magnetic flux density of each rotor magnet 15 is preferably more than or equal to 1.3, and more preferably more than or equal to 1.4.

As illustrated in Figs. 1 to 4, rotor 10 includes sensor magnet 16. As illustrated in Fig. 1, sensor magnet 16 is attached to outer core 13 in a direction in which axial center C of rotary shaft 11 extends. That is, sensor magnet 16 is fixed to outer core 13. As illustrated in Figs. 2 to 4, sensor magnet 16 has an annular shape surrounding rotary shaft 11. Specifically, sensor magnet 16 has ring portion 16a having an annular shape and leg 16b protruding from a surface of ring portion 16a on outer core 13 side. In the present exemplary embodiment, sensor magnet 16 has a plurality of legs 16b. As illustrated in Fig. 1, leg 16b is inserted into second insertion hole 13b provided in outer core 13. As illustrated in Fig. 5, outer core 13 is provided with five second insertion holes 13b. Thus, as illustrated in Figs. 3 and 4, sensor magnet 16 is provided with five legs 16b.

In sensor magnet 16, a surface facing the axial direction of rotary shaft 11 is magnetized so as to correspond to the plurality of rotor magnets 15 fixed to outer core 13. Specifically, sensor magnet 16 is magnetized such that the surface in a direction of axial center C of rotary shaft 11 has multipolarity. That is, sensor magnet 16 has a configuration in which a plurality of N poles and S poles are alternately and repeatedly present along the rotation direction of rotary shaft 11 on the surface in the direction of axial center C of rotary shaft 11. More specifically, sensor magnet 16 is magnetized such that at least one surface of the annular outer side of ring portion 16a has multipolarity. The direction of the magnetic flux generated by sensor magnet 16 is the direction of the axial center C of rotary shaft 11.

As illustrated in Fig. 1, sensor magnet 16 faces magnetic detection sensor 31 mounted on circuit board 30. Sensor magnet 16 is disposed to face magnetic detection sensor 31 in the direction of axial center C of rotary shaft 11. Specifically, an annular outer surface of ring portion 16a faces the magnetic detection sensor 31.

The magnetic detection sensor 31 is, for example, a Hall element or a magnetic resistance element. The magnetic detection sensor 31 detects a change in the magnetic flux of sensor magnet 16. When rotor 10 rotates, the magnetic flux of sensor magnet 16 is detected by magnetic detection sensor 31, whereby the rotational displacement such as the rotation angle and the rotation position of rotor 10 can be detected. A plurality of magnetic detection sensors 31 may be provided on circuit board 30.

In this manner, sensor magnet 16 generates a magnetic flux for detecting the rotational displacement of rotor 10. That is, sensor magnet 16 generates a magnetic flux that does not contribute to the rotation of rotor 10 unlike rotor magnet 15 that generates a magnetic flux that contributes to the rotation of rotor 10. Thus, the magnetic flux density of sensor magnet 16 may be any magnetic flux density that generates a magnetic flux that only detects the rotational displacement of rotor 10, and may be lower than the magnetic flux density of rotor magnet 15. Therefore, as sensor magnet 16, an inexpensive magnet such as a ferrite magnet can be used instead of an expensive magnet such as a neodymium magnet. Further, sensor magnet 16 does not have to be made of only a magnetic material, but it may be a mixture of an inexpensive and versatile magnet material and a plastic material.

Sensor magnet 16 may be a relay magnet that relays the magnetic flux of rotor magnet 15 to magnetic detection sensor 31. In this case, the positions of the magnetic poles of sensor magnet 16 and rotor magnet 15 coincide with each other. Thus, it is preferable that sensor magnet 16 is magnetized after being fixed to outer core 13 in which rotor magnet 15 is inserted into second insertion hole 13b so that the positions of the magnetic poles of sensor magnet 16 and rotor magnet 15 do not shift.

Sensor magnet 16 is held by outer core 13. Outer core 13 and sensor magnet 16 each have a fitting part to be fitted to each other. Fitting of the fitting part of outer core 13 and the fitting part of sensor magnet 16 integrates sensor magnet 16 and outer core 13.

Specifically, as illustrated in Fig. 1, outer core 13 has second insertion hole 13b (attachment hole) as the fitting part. Sensor magnet 16 has leg 16b to be inserted into second insertion hole 13b as the fitting part. Thus, sensor magnet 16 is provided integrally with outer core 13 by inserting leg 16b provided in sensor magnet 16 into second insertion hole 13b provided in outer core 13. Leg 16b is press-fitted into second insertion hole 13b. Leg 16b inserted into second insertion hole 13b is in contact with elastic body 14. Leg 16b is pressed against the inner surface of second insertion hole 13b by being pressed by elastic body 14.

Next, stator 20 will be described. Stator 20 is disposed facing rotor 10 with an air gap between stator 20 and rotor 10. Specifically, stator 20 is positioned outside rotor 10 and is disposed so as to surround outer core 13 of rotor 10.

Stator 20 generates magnetic force acting on rotor 10. Specifically, stator 20 has a configuration in which a plurality of N poles and S poles are alternately and repeatedly present so as to generate a magnetic flux on an air gap surface with outer core 13 of rotor 10. The direction of the main magnetic flux generated by stator 20 is a direction (radial direction) orthogonal to axial center C of rotary shaft 11. Stator 20 constitutes a magnetic circuit together with rotor 10.

Stator 20 includes stator core 21 and winding coil 22.

Stator core 21 generates a magnetic force for rotating rotor 10. Stator core 21 is, for example, a stacked body in which a plurality of electromagnetic steel sheets are stacked in the direction of axial center C of rotary shaft 11. Stator core 21 is not limited to the stacked body, and may be a bulk body made of a magnetic material. Stator core 21 has a plurality of teeth protruding toward rotary shaft 11. Each of the plurality of teeth radially extends in a direction (radial direction) orthogonal to axial center C of rotary shaft 11, and faces outer core 13 of rotor 10. The plurality of teeth are disposed at equal intervals along the rotation direction of rotary shaft 11 while forming a slot between two adjacent teeth.

Winding coil 22 is a stator coil which is an armature winding of stator 20. Winding coil 22 is wound around stator core 21. Specifically, winding coil 22 is wound around a plurality of teeth of stator core 21 via insulators. As an example, winding coil 22 is a concentrated winding coil wound around each tooth of stator core 21. Winding coil 22 is housed in a slot of stator core 21. The winding method of winding coil 22 is not limited to concentrated winding, and may be distributed winding.

Winding coil 22 is a three-phase winding so that rotor 10 can be rotated as a three-phase synchronous motor. Specifically, winding coil 22 is formed of unit coils of three phases of U-phase, V-phase, and W-phase that are electrically different from each other by 120 degrees. That is, winding coil 22 wound around each tooth of stator core 21 is energized and driven by three-phase alternating current energized in units of phases of the U-phase, the V-phase, and the W-phase. This generates a main magnetic flux as stator 20 in each tooth of stator core 21. That is, each tooth around which winding coil 22 is wound is a magnetic pole tooth, and is an electromagnet that generates a magnetic force by energizing winding coil 22.

The end of winding coil 22 of each phase is connected by a winding connection portion of circuit board 30. In circuit board 30, pattern wiring for electrically connecting the plurality of winding coils 22 is formed for each phase of the U phase, the V phase, and the W phase. This electrically connects the end of winding coil 22 of each phase to the pattern wiring of circuit board 30 by solder or the like.

In electric motor 1 configured as described above, when a current flows through winding coil 22 included in stator 20, a field current flows through winding coil 22 to generate a magnetic field, and stator 20 generates a magnetic force acting on rotor 10. Specifically, stator 20 generates a magnetic flux on an air gap surface with outer core 13 included in rotor 10 so that N poles and S poles are alternately present along the rotation direction (circumferential direction) of rotary shaft 11. In rotor 10, a magnetic flux passing through stator 20 is generated by rotor magnet 15 embedded in outer core 13. The magnetic flux generated in stator 20 and the magnetic flux generated from rotor magnet 15 included in rotor 10 interact with each other to generate a magnetic force that becomes torque to rotate rotor 10, which causes rotor 10 to rotate.

At this time, since sensor magnet 16 is provided in rotor 10, sensor magnet 16 also rotates with rotation of rotor 10. As a result, the magnetic flux of sensor magnet 16 is detected by magnetic detection sensor 31 mounted on circuit board 30, whereby the rotational displacement of rotor 10 can be detected.

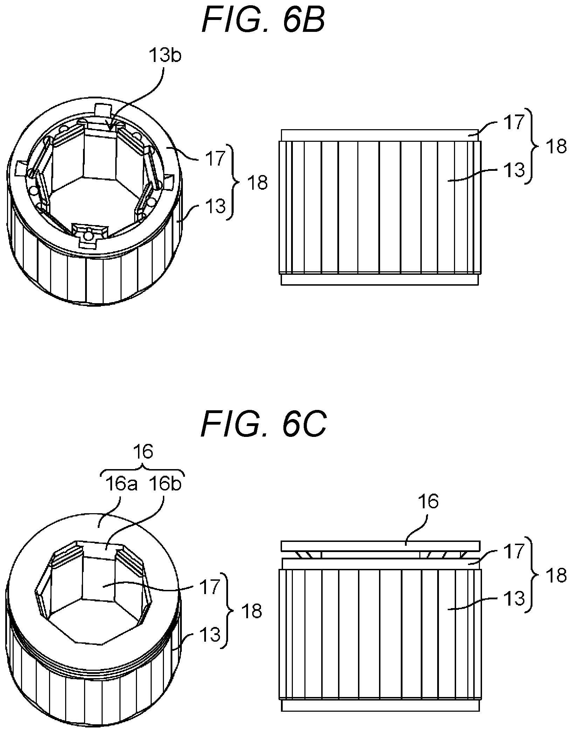

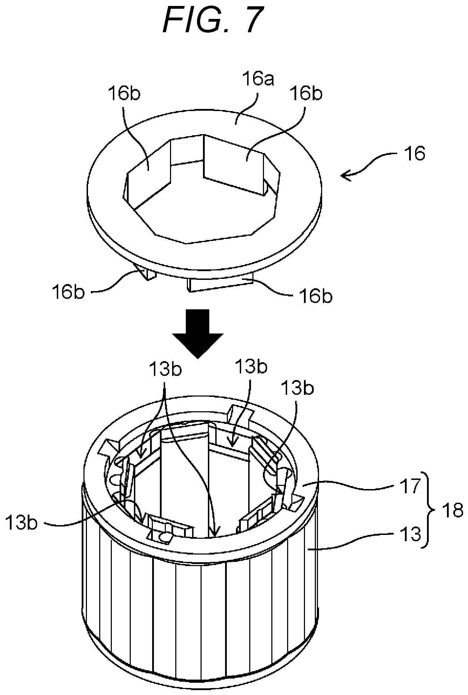

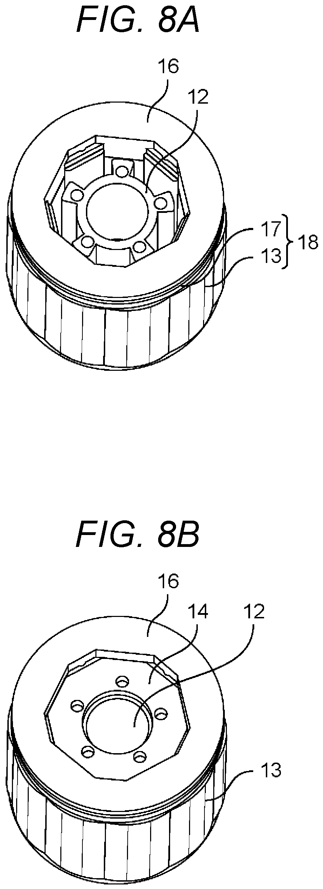

Next, a method for assembling rotor 10 according to the exemplary embodiment will be described with reference to Figs. 6A to 8B. Figs. 6A to 8B are diagrams for describing a method for assembling rotor 10 according to the exemplary embodiment. Fig. 6A is a diagram for describing a step until sensor magnet 16 is fixed to outer core molded product 18 in the method for assembling rotor 10 according to the exemplary embodiment. Fig. 6B is a diagram for describing a step until sensor magnet 16 is fixed to outer core molded product 18 in the method for assembling rotor 10 according to the exemplary embodiment. Fig. 6C is a diagram for describing a step until sensor magnet 16 is fixed to outer core molded product 18 in the method for assembling rotor 10 according to the exemplary embodiment. Fig. 7 is a diagram for describing a step of fixing sensor magnet 16 to outer core molded product 18 in the method for assembling rotor 10 according to the exemplary embodiment. Fig. 8A is a diagram for describing a step until an elastic body is filled between inner core 12 and outer core 13 after sensor magnet 16 is fixed to outer core molded product 18 in the method for assembling rotor 10 according to the exemplary embodiment. Fig. 8B is a diagram for describing a step until an elastic body is filled between inner core 12 and outer core 13 after sensor magnet 16 is fixed to outer core molded product 18 in the method for assembling rotor 10 according to the exemplary embodiment.

First, as illustrated in Fig. 6A, rotor magnet 15 is inserted into each of the plurality of first insertion holes 13a of outer core 13.

Next, as illustrated in Fig. 6B, outer core 13 is molded by BMC. As a result, BMC serves as molding frame 17, and outer core molded product 18 including outer core 13 and molding frame 17 is completed. At this time, the opening of second insertion hole 13b of outer core 13 is closed to form a recess into which leg 16b of sensor magnet 16 is inserted. As an example, the molding temperature of BMC is from 140°C to 160°C.

Next, as illustrated in Fig. 6C, sensor magnet 16 molded in advance is fixed to outer core molded product 18. Specifically, as illustrated in Fig. 7, sensor magnet 16 is fixed to outer core 13 by press-fitting leg 16b of sensor magnet 16 into second insertion hole 13b of outer core 13. This integrates sensor magnet 16 and outer core 13 (outer core molded product 18).

Next, as illustrated in Fig. 8A, inner core 12 is disposed inside outer core 13. Specifically, inner core 12 is disposed inside outer core molded product 18.

Next, as illustrated in Fig. 8B, a liquid resin material constituting elastic body 14 is filled between outer core molded product 18 and inner core 12 and cured. As a result, elastic body 14 is filled between outer core 13 and inner core 12.

Although not illustrated, rotor 10 is completed by press-fitting rotary shaft 11 into the through hole of inner core 12. Electric motor 1 is completed by assembling rotor 10 and stator 20.

In this manner, according to rotor 10 and electric motor 1 of the present exemplary embodiment, elastic body 14 is filled between inner core 12 and outer core 13. This makes it possible to suppress vibration and noise of rotor 10. In rotor 10 and electric motor 1 according to the present exemplary embodiment, the magnetic flux density of rotor magnet 15 fixed to outer core 13 is more than or equal to 1.0 tesla. This configuration can realize high output. Specifically, rotor magnet 15 is a neodymium magnet. This configuration can realize small and highly efficient electric motor 1.

In rotor 10 and electric motor 1 according to the present exemplary embodiment, sensor magnet 16 attached to outer core 13 in the direction of axial center C of rotary shaft 11 is provided integrally with outer core 13.

With this configuration, outer core 13 to which rotor magnet 15 is fixed and sensor magnet 16 are integrated even when elastic body 14 is deformed and a following delay occurs in outer core 13 when rotor 10 rotates at a high speed or the like. Thus, detecting the magnetic flux of sensor magnet 16 with magnetic detection sensor 31 makes it possible to accurately detect the rotational displacement of rotor 10. In this manner, according to rotor 10 and electric motor 1 of the present exemplary embodiment, noise reduction and high output can be achieved, and rotational displacement of rotor 10 can be accurately detected.

In rotor 10 and electric motor 1 according to the present exemplary embodiment, sensor magnet 16 has leg 16b to be inserted into second insertion hole 13b provided in outer core 13.

This configuration can easily fix sensor magnet 16 to outer core 13 and can prevent the position of sensor magnet 16 from being shifted in the rotation direction of rotary shaft 11 when rotor 10 rotates. This makes it possible to more accurately detect the rotational displacement of rotor 10.

In this case, in the present exemplary embodiment, leg 16b of sensor magnet 16 is press-fitted into second insertion hole 13b of outer core 13.

This configuration makes it possible to integrate sensor magnet 16 and outer core 13 by fitting. Thus, it is possible to further prevent sensor magnet 16 from shifting when rotor 10 rotates.

In rotor 10 and electric motor 1 according to the present exemplary embodiment, elastic body 14 is in contact with an inner surface of leg 16b of sensor magnet 16.

With this configuration, leg 16b of sensor magnet 16 is pressed against the inner surface of second insertion hole 13b by the elastic force of elastic body 14. This makes it possible to further prevent sensor magnet 16 from shifting when rotor 10 rotates.

As described above, rotor 10 according to the present exemplary embodiment includes inner core 12 to which rotary shaft 11 is fixed, outer core 13 surrounding inner core 12, elastic body 14 filled between inner core 12 and outer core 13, the plurality of rotor magnets 15 annularly disposed along the rotation direction of rotary shaft 11 and fixed to outer core 13, and sensor magnet 16 fixed to outer core 13 in an axial direction in which the axial center of rotary shaft 11 extends. The magnetic flux density of each of the plurality of rotor magnets 15 is more than or equal to 1.0 Tesla. Sensor magnet 16 is provided integrally with outer core 13.

This makes it possible to realize an electric motor or the like capable of achieving noise reduction and high output of the electric motor and accurately detecting rotational displacement of the rotor.

It is preferable that outer core 13 and sensor magnet 16 each have a fitting part to be fitted to each other, outer core 13 has second insertion hole 13b as the fitting part, and sensor magnet 16 has leg 16b to be inserted into second insertion hole 13b as the fitting part.

Leg 16b is preferably press-fitted into second insertion hole 13b.

Outer core 13 preferably further includes a plurality of insertion holes into which the plurality of rotor magnets 15 are inserted.

### (Modification)

Although rotor 10 and electric motor 1 according to the present disclosure have been described above based on the exemplary embodiment, the present disclosure is not limited to the exemplary embodiment described above.

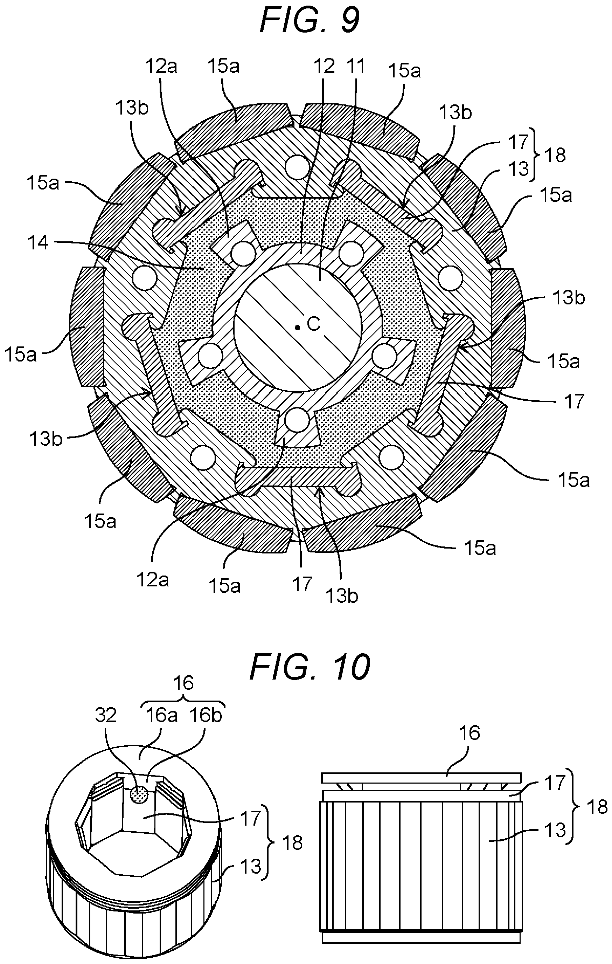

Fig. 9 is a sectional view of a rotor according to a modification. Fig. 10 is a perspective view of a rotor according to another modification.

In the above exemplary embodiment, electric motor 1 is an IPM motor in which rotor 10 is an IPM rotor. However, the present disclosure is not limited to this configuration. Electric motor 1 may be an SPM motor in which rotor 10 is an SPM rotor. In this case, in the electric motor that is the SPM rotor, as illustrated in Fig. 9, rotor magnet 15a is fixed to the outer peripheral surface of outer core 13 forming rotor 10. Outer core 13 has an outer peripheral surface that surrounds rotary shaft 11 along the rotation direction and to which a plurality of rotor magnets 15a are attached.

In the above embodiment, rotor magnet 15 is a sintered magnet. However, the present disclosure is not limited to this configuration. For example, rotor magnet 15 may be a bonded magnet.

In the above exemplary embodiment, electric motor 1 may be a molded motor in which stator 20 is covered with mold resin. In this case, as the mold resin, an insulating resin material having excellent thermal conductivity, such as a polyester resin or an epoxy resin, can be used.

As illustrated in Fig. 10, sensor magnet 16 may be fixed to molded frame 17 constituting rotor 10 with adhesive 32. Molding frame 17 constitutes outer core molded product 18 together with outer core 13. Sensor magnet 16 may be fixed to inner core 12 constituting rotor 10 with an adhesive.

In the above-described exemplary embodiment, outer core 13 is provided with second insertion hole 13b (first attachment hole) as the fitting part, and sensor magnet 16 is provided with leg 16b (second leg) as the fitting part. However, the present disclosure is not limited to this configuration. For example, outer core 13 may be provided with a leg (first leg) as the fitting part, and sensor magnet 16 may be provided with an insertion hole (second attachment hole) as the fitting part. In this case, the leg of outer core 13 is inserted into the insertion hole of sensor magnet 16, whereby outer core 13 and sensor magnet 16 are fixed.

In the above-described exemplary embodiment, a case where electric motor 1 is used as a fan motor has been exemplified. However, the present disclosure is not limited to this configuration. Electric motor 1 can also be applied to a motor other than the fan motor. That is, electric motor 1 can be used for various electric devices such as household electric devices other than air conditioners, or industrial electric devices such as automobile devices or robots. Thus, the load attached to rotary shaft 11 of electric motor 1 is not limited to a rotating fan.

### INDUSTRIAL APPLICABILITY

The technique of the present disclosure can be widely used for an electric motor including a rotor, an electric device including the electric motor, and the like.

### REFERENCE MARKS IN THE DRAWINGS

1: electric motor
10: rotor
11: rotary shaft
12: inner core
12a: projection
13: outer core
13a: first insertion hole
13b: second insertion hole
14: elastic body
15, 15a: rotor magnet
16: sensor magnet
16a: ring portion
16b: leg
17: molding frame
18: outer core molded product
20: stator
21: stator core
22: winding coil
30: circuit board
31: magnetic detection sensor
32: adhesive

## Claims

1. A rotor comprising:
an inner core to which a rotary shaft is fixed;
an outer core surrounding the inner core;
an elastic body filled between the inner core and the outer core;
a plurality of rotor magnets annularly disposed along a rotation direction of the rotary shaft and fixed to the outer core; and
a sensor magnet fixed to the outer core in an axial direction in which an axial center of the rotary shaft extends,
wherein each of the plurality of rotor magnets has a magnetic flux density of more than or equal to 1.0 Tesla, and
the sensor magnet is provided integrally with the outer core.

2. The rotor according to Claim 1, wherein the plurality of rotor magnets are neodymium magnets.

3. The rotor according to Claim 1 or 2, wherein
each of the outer core and the sensor magnet includes a fitting part that fits each other,
the outer core includes a first attachment hole or a first leg as the fitting part, and
the sensor magnet includes a second leg inserted into the first attachment hole or a second attachment hole into which the first leg is inserted as the fitting part.

4. The rotor according to Claim 3, wherein the first leg is press-fitted into the second attachment hole, or the second leg is press-fitted into the first attachment hole.

5. The rotor according to Claim 3 or 4, wherein the elastic body is in contact with an inner surface of the leg.

6. The rotor according to Claim 1 or 2, wherein the sensor magnet and the outer core are fixed with an adhesive.

7. The rotor according to any one of Claims 3 to 5, wherein the outer core further includes a plurality of insertion holes into which the plurality of rotor magnets are inserted.

8. The rotor according to any one of Claims 3 to 5, wherein the outer core further includes an outer peripheral surface to which the plurality of rotor magnets are attached, the outer peripheral surface surrounding the rotary shaft along the rotation direction.

9. The rotor according to any one of Claims 1 to 8, wherein the sensor magnet is formed in an annular shape surrounding the rotary shaft, the sensor magnet including a surface facing the axial direction of the rotary shaft, the surface being magnetized corresponding to the plurality of rotor magnets fixed to the outer core.

10. An electric motor comprising:
the rotor according to any one of Claims 1 to 9; and
a stator positioned outside the rotor.
